(19) Europäisches Patentamt
European Patent Office
Office européen des brevets

(11) **EP 1 284 418 A2**

(12) **EUROPÄISCHE PATENTANMELDUNG**

(43) Veröffentlichungstag:
**19.02.2003 Patentblatt 2003/08**

(51) Int Cl.⁷: $G01N\ 21/45$, $G01N\ 21/55$

(21) Anmeldenummer: **02012360.0**

(22) Anmeldetag: **05.06.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **17.08.2001 DE 10140399**

(71) Anmelder: **FRAUNHOFER-GESELLSCHAFT ZUR FÖRDERUNG DER ANGEWANDTEN FORSCHUNG E.V.**
**80636 München (DE)**

(72) Erfinder: **Wikerstal, Andreas**
**70193 Stuttgart (DE)**

(74) Vertreter: **Grünecker, Kinkeldey, Stockmair & Schwanhäusser Anwaltssozietät Maximilianstrasse 58 80538 München (DE)**

(54) **Optisches Analyseverfahren und optische Detektoreinrichtung**

(57) Die vorliegende Erfindung betrifft ein optisches Analyseverfahren und eine optische Detektoreinrichtung, insbesondere zur Analyse von Substanzen oder Stoffgemischen, zur Bestimmung von Änderungen von Massenbelegungen auf Oberflächen von Sensoren sowie zur Bestimmung von Brechungsindizes von Substanzen oder Stoffgemischen, auf Basis eines interferometrischen Meßprinzips. Dabei erfolgt eine Auswertung eines charakteristischen, linienförmigen Intensitätsverteilung bezüglich der Ortsfrequenzen, wobei die Intensitätsverteilung mittels einer Überlagerung von zumindest drei Lichtbündeln erzeugt wird. Die optische Detektoreinrichtung und das optische Analyseverfahren eignen sich in besonderer Weise zu einer Auslegung als Viel-Kanal-Meßsystem, mit dem eine Vielzahl an Proben gleichzeitig untersucht werden können.

**Figur 1a**

EP 1 284 418 A2

**Figur 1b**

**Figur 1c**

**Beschreibung**

Die Erfindung betrifft ein optisches Analyseverfahren und eine optische Detektoreinrichtung nach den Oberbegriffen der Ansprüche 1 und 8, die auf einer Bestimmung oder einer Beeinflussung einer Ausbreitungsgeschwindigkeit von Licht basiert sind, wobei das optische Analyseverfahren und die optische Detektoreinrichtung insbesondere zur Analyse von Substanzen oder Stoffgemischen, zur Bestimmung von Änderungen von Massenbelegungen auf Oberflächen von Sensoren oder zur Bestimmung von Brechungsindizes von Substanzen oder Stoffgemischen einsetzbar sind.

Zum Nachweis von chemischen Reaktionen oder zur Analyse von Substanzen oder Stoffgemischen zur Bestimmung von Massenbelegungen auf Oberflächen oder zur Bestimmung von Brechungszahlen eines Mediums bzw. einer Brechungszahldifferenz zweier Flüssigkeiten oder Gase besteht anwenderseitig ein Bedarf nach präzisen und weitgehend störungsfrei arbeitenden und verhältnismäßig einfach aufgebauten Detektorsystemen und Analyseverfahren.

Beispielsweise führt eine physikalische bzw. eine chemische Anbindung von Molekülen oder Biomolekülen an eine Sensoroberfläche einer Detektoreinrichtung zu einer Änderung einer Massenbelegung auf dieser Sensoroberfläche, welche über verschiedene im Stand der Technik bekannte Methoden und Einrichtungen detektierbar ist.

Die verschiedenen bekannten Methoden und Einrichtungen können in zwei Hauptgruppen untergliedert werden, wobei zwischen indirekten und direkten Detektionsprinzipien unterschieden wird.

Die indirekten Detektionsprinzipien weisen eine Anbindung insbesondere von Biomolekülen an Rezeptormolekülen mit Hilfe sogenannter Markierungsmoleküle nach. Vor einer Bindung der nachzuweisenden Biomoleküle an die Rezeptormoleküle, werden die Biomoleküle mit Markierungsmolekülen präpariert und somit zu ‚markierten Biomolekülen'. Nach Ankopplung der markierten Biomoleküle an die Rezeptormoleküle wird den Markierungsmolekülen mittels einer Anregungsquelle Energie zugeführt. Ein Bindungsergebnis wird mittels der von den Markierungsmolekülen als Folge dieser Anregung abgestrahlte Energie nachgewiesen. Als Anregungsprinzipien der Markierungsmoleküle sind Fluoreszenz, Radioaktivität oder Enzyme bekannt.

Ein direktes Detektionsprinzip, d.h. eine Detektion, welche ohne Markierung und Anregung wie beispielsweise durch Fluoreszenz oder Radioaktivität auskommt, kann u.a. dadurch erfolgen, daß eine Ausbreitungsgeschwindigkeit eines Lichtstrahles in Abhängigkeit von ihrer Beeinflussung durch die zu erfassende Substanz (Detektionsmedium) ermittelt wird. Über eine Veränderung der Ausbreitungsgeschwindigkeit wird auf das beeinflussende Detektionsmedium rückgeschlossen.

Die Veränderung der Ausbreitungsgeschwindigkeit des Lichtstrahles kann mittels verschiedener optischer Anordnungen detektiert werden. Vielfach wird eine dazu notwendige Geschwindigkeitsmessung auf eine Winkelmessung zurückgeführt. Es finden hierbei sowohl sich im Raum frei ausbreitende Lichtstrahlen als auch in Wellenleitern geführte Lichtstrahlen Verwendung.

Ein in einem Lichtwellenleiter geführter Lichtstrahl erzeugt ein außerhalb des Lichtwellenleiters präsentes, evaneszentes Feld, welches mit der Umgebung des Lichtwellenleiters in Wechselwirkung tritt. Änderungen in der Umgebung des Lichtwellenleiters führen über das evaneszente Feld zur Änderung der Ausbreitungsgeschwindigkeit des Lichtstrahles. Mittels dieses Zusammenhanges können mit optischen Lichtwellenleitern beispielsweise Änderungen der Massenbelegungen auf der Oberfläche des Lichtwellenleiters, genauer gesagt auf der Oberfläche der lichtleitenden Schicht eines insbesondere planaren Lichtwellenleiters, detektiert werden.

Drei wesentliche Meßprinzipien zur Bestimmung der Änderung der Ausbreitungsgeschwindigkeit sind bekannt, die Oberflächen-Plasmonen-Resonanz (B. Liedberg, C. Nylander, I. Lundström, "Surface Plasmon Resonance for Gas Detection and Biosensing", Sensors & Actuators, 4, 1983), das Prinzip des Gitterkopplers (K. Tiefenthaler, L. Lukosz, "Integrated optical humidity and gas sensors", Proc. SPIE Vol. 514, 215-218, 1984) und die Interferometrie (R.G. Heidemann, R.P.H. Kooyman, J. Greve, "Performance of a highly sensitive optical waveguide Mach-Zender interferometer immunosensor", Sensors & Actuators B10, 209-217, 1993 und A. Brandenburg, R.

Krauter, Ch. Künzel, M. Stefan, H. Schulte, "Interferometric detection of bioreactions", Applied Optics, 2001).

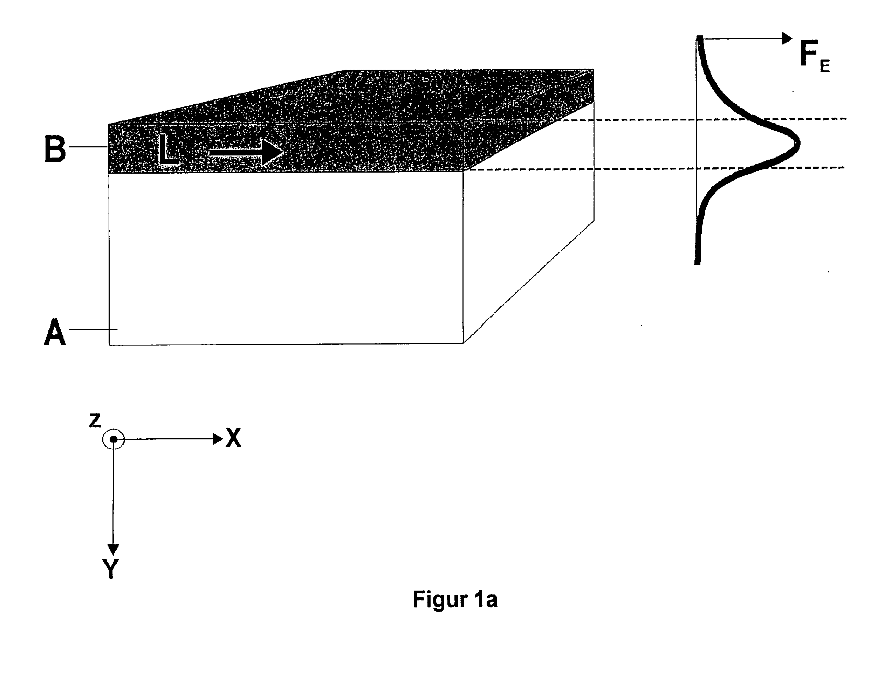

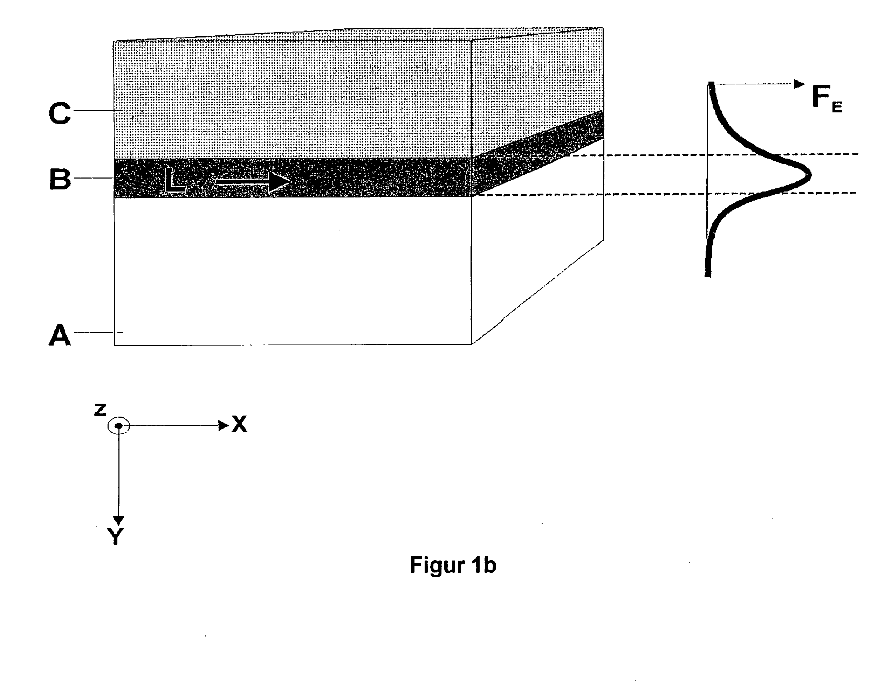

In den Figuren 1a, 1b, 1b ist ein solches direktes Sensorprinzip im Falle eines geführten Lichtstrahles L schematisch dargestellt. Ein Lichtstrahl L ist dabei in einer lichtwellenleitenden Schicht B, die auf einer Trägerschicht A aufgebracht ist, geführt. Eine Änderung eines Brechungsindexes einer Flüssigkeit C oder eine Anlagerung von Substanzen E auf der Oberfläche des Sensors bewirkt eine Änderung der Ausbreitungsgeschwindigkeit des geführten Lichtstrahles L. Als Maß für eine solche Änderung der Ausbreitungsgeschwindigkeit kann beispielsweise der effektive Brechungsindex $\Delta N$ angesehen werden.

Fig. 1a zeigt dabei schematisch den Grundaufbau eines Sensors, bei dem eine Schicht eines Lichtwellenleiters B auf einer Trägerschicht eines Substrats A aufgebracht ist. Der Lichtstrahl L ist in der Schicht des Lichtwellenleiters B in Richtung der x-Achse geführt. In einem nebenstehenden Diagramm ist ein Verlauf eines elektrischen bzw. magnetischen Feldes $F_E$ innerhalb des Wellenleiters räumlich über der x-Achse (Ausbreitungsrichtung des Lichtstrahles L) und der senkrecht dazu angeordneten y-Achse wiedergegeben. Ein glei-

cher maßen über diesen Achsen aufgetragener Brechzahlverlauf ΔN würde hingegen einen stufenförmigen Verlauf aufweisen.

In Fig. 1b ist eine Flüssigkeitsschicht C über der Lichtwellenleiterschicht B angeordnet. Entsprechend den oben geschriebenen Wechselwirkungen zwischen Lichtwelle L und Flüssigkeit C wird refraktometrisch ein Brechungsindex ΔN bestimmt.

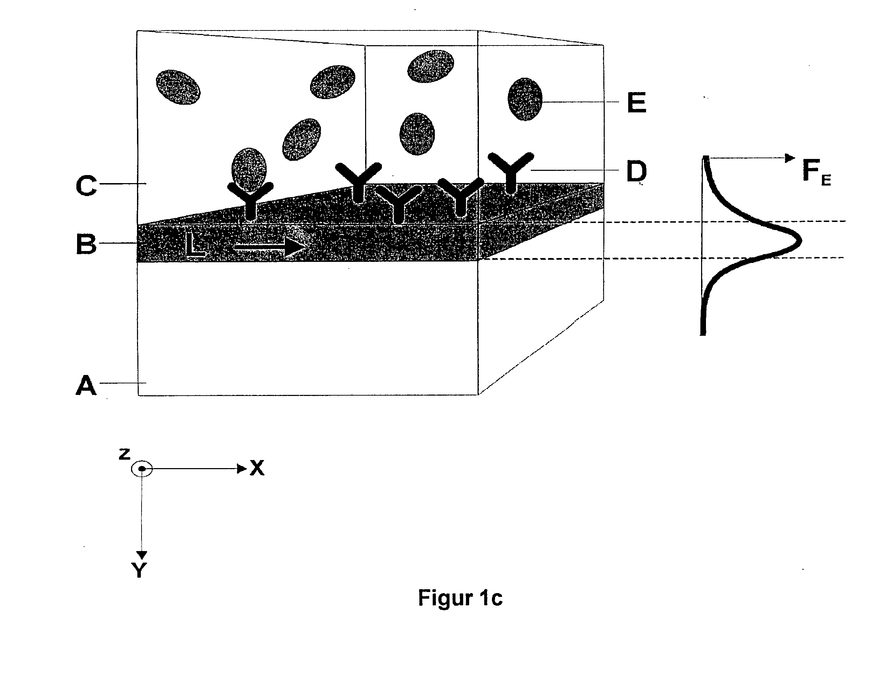

In Fig. 1c sind in der Flüssigkeitschicht C vorhandene, zu detektierende Medien E (bevorzugt Biomoleküle) mittels sogenannter spezifischen Rezeptoren D, beispielsweise Antikörper, an der Oberfläche des Lichtwellenleiters B gebunden. Diese biochemische Anbindung an der Oberfläche wird detektiert.

Eine hochempfindliche Methode, die Änderung der Ausbreitungsgeschwindigkeit des geführten Lichtstrahles zu detektieren, nutzt ein interferometrisches Meßprinzip, wobei optische Teiler ('Strahlteiler') für interferometrische Zwecke verwendet werden. Hierbei wurden verschiedene Sensoren realisiert, wie beispielsweise das Mach-Zender Interferometer (R.G. Heidemann, R.P.H. Kooyman, J. Greve, "Performance of a highly sensitive optical waveguide Mach-Zender interferometer immunosensor", Sensors & Actuactors B10, 209-217, 1993), das Farbri-Pero Interferometers (A. Brandenburg, R. Edelhäuser, R. Hutter, "Integrated optical gas sensors using organically modified silicates as sensitive films", Sensors & Actuators B11, 361-374, 1993) und das Young Interferometer (A. Brandenburg, R. Krauter, Ch. Künzel, M. Stefan, H. Schulte, "Interferometric detection of bioreactions", Applied Optics, 2001).

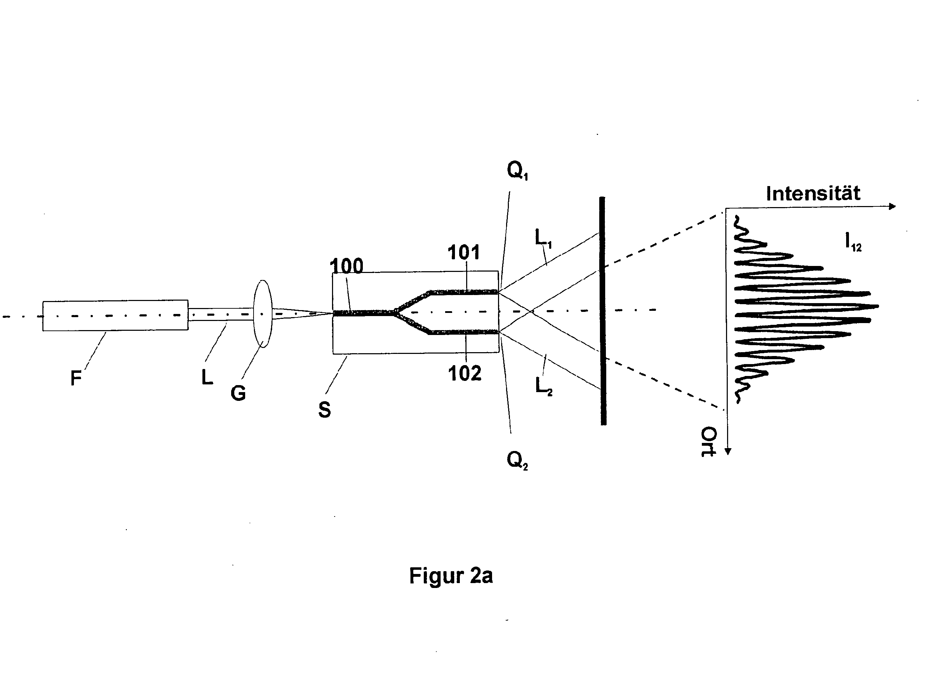

Am Beispiel des Young-Interferometers wird im folgenden das interferometrische Detektionsprinzip näher erläutert, wobei das Meßprinzip des Young-Interferometers in Fig. 2a schematisch gezeigt ist.

Das Young-Interferometer weist einem planaren, lichtleitenden und monomodigen Lichtwellenleiter auf einem Sensor S auf. Der Lichtstrahl L wird über eine Stirnfläche des Sensors S mit Hilfe eines Mikroskopobjektivs G in den Lichtwellenleiter 100 eingekoppelt. Als Lichtquelle F dient dabei ein Helium-Neon-Laser (mit einer festen Wellenlänge von 632,8 nm). Der Lichtstrahl L wird mittels einer symmetrischen Y-Verzweigung des Lichtwellenleiters 100 in zwei Lichtbündel $L_1$ und $L_2$ aufgeteilt, die sich in zwei sog. Sensorarmen 101 und 102 longitudinal, d.h. entlang der Haupterstreckung der Sensorarme, ausbreiten. Nach Austreten der Lichtbündel $L_1$ und $L_2$ strahlen diese wie Punktlichtquellen Q1, Q2 im freien Raum divergent ab, wobei eine Überlappung der Lichtbündel $L_1$ und $L_2$ nach einer definierten Wegstrecke stattfindet. Die dabei entstehende räumliche Intensitätsverteilung mit einem Interferenzsignal $I_{12}$ wird von einer Erfassungseinrichtung, beispielsweise einer CCD-Kamera, erfaßt.

Das Interferenzsignal $I_{12}$ enthält eine spezifische Ortsfrequenz $f_{12}$, wobei die Ortsfrequenz $f_{12}$ auf den physikalischen Parametern der Meßanordnung beruht und eindeutig definiert ist. Dabei hängt die Ortsfrequenz $f_{12}$ insbesondere von einer Lichtwellenlänge des Lichtstrahles L, einem Abstand zwischen den Austrittspunkten $Q_1$ und $Q_2$ der Lichtbündel $L_1$ bzw. $L_2$ aus dem Lichtwellenleiter 100 (den sog. 'Strahlquellen') und einem Abstand zwischen den jeweiligen Strahlquellen $Q_1$ bzw. $Q_2$ und der Erfassungseinrichtung ab.

Das interferometrische Meßprinzip beruht auf einem differentiellen Meßprinzip. Dies bedeutet, daß ausschließlich eine relative Phasenverschiebung zwischen den Lichtbündeln $L_1$,$L_2$ meßbar ist, wobei ausschließlich eine Änderung einer Phasenrelation der beiden überlagerten Lichtbündel $L_1$ und $L_2$ detektierbar ist. Ein direkter Rückschluß, ob einer der Lichtbündel $L_1$ bzw. $L_2$ oder beide Lichtbündel bzw. die Sensorarme 101,102, in denen sie sich ausbreiten, eine Veränderung aufweisen, ist nicht möglich.

Das differentielle Meßprinzip des Interferometers, kann in soweit als Vorteil betrachtet werden, als unerwünschte Effekte wie Temperaturunterschiede, Porosität und unspezifische Bindung der zu detektierenden Medien weitgehend eliminiert sind, wenn die unterschiedlichen Sensorarme weitgehend gleiche Eigenschaften aufweisen.

Anwenderseitig wird die Verbesserung solcher bestehenden Systeme im Sinne einer hochauflösenden optischen Detektoreinrichtung gewünscht, derart, daß die optische Detektoreinrichtung und das optische Analyseverfahren eine Auslegung als Viel-Kanal-System ermöglichen, so daß in einem Arbeitsgang auch eine Vielzahl von Analysen parallel durchgeführt werden können.

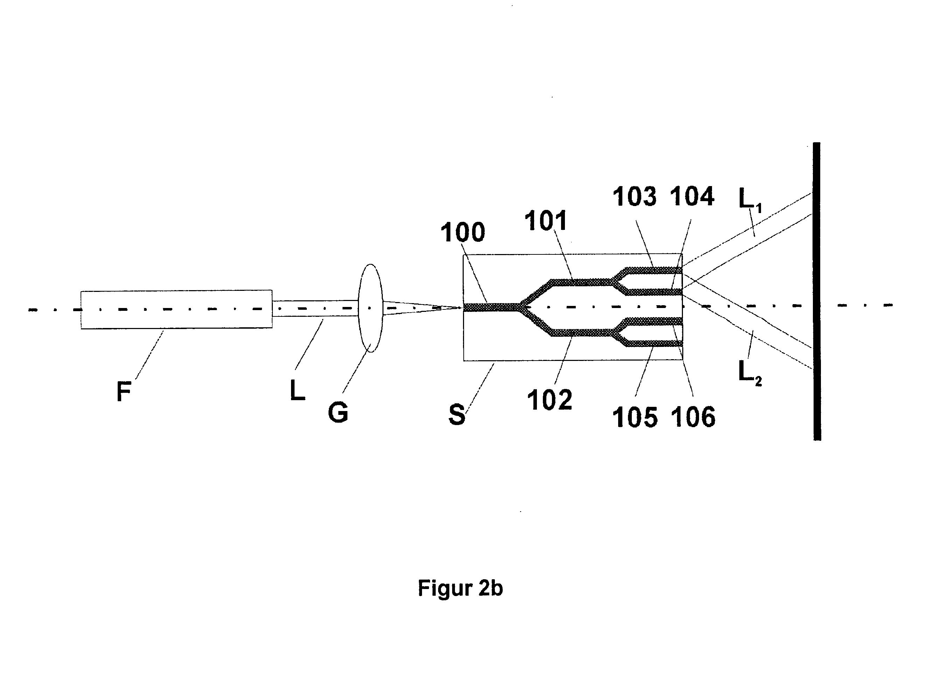

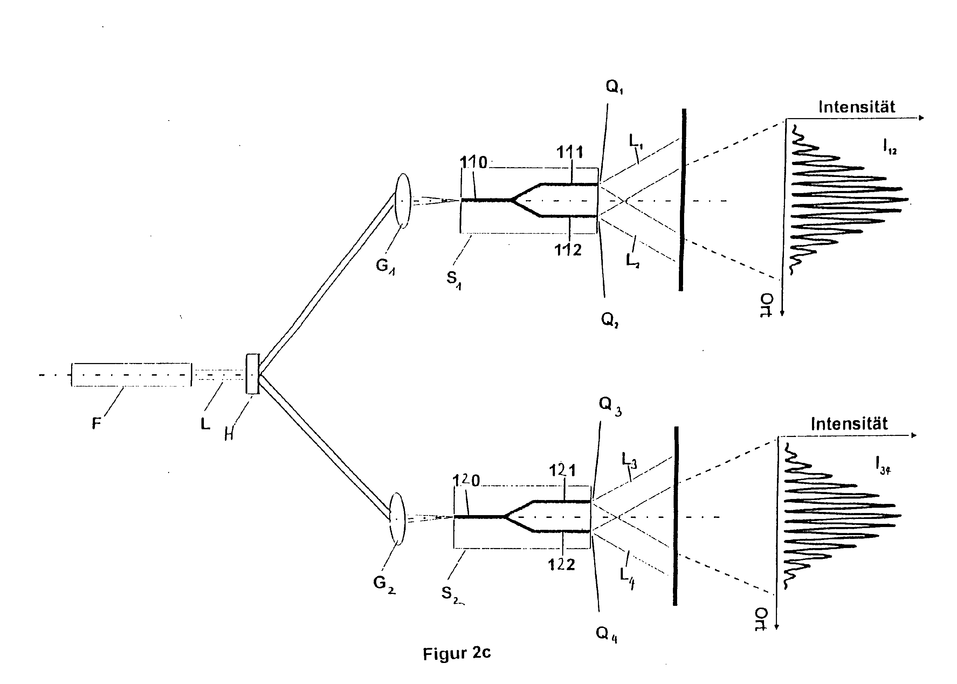

Eine denkbare Lösung dieses anwenderseitigen Wunsches könnte in einer Parallelisierung des beschriebenen interferometrischen Meßprinzips, beispielsweise über kaskadenförmige Anordnungen von Strahlteilern oder durch einen Aufbau eines Arrays von mehreren Strahlteilern auf der Sensoroberfläche gefunden werden. In den Figuren 2b und 2c sind solche möglichen Lösungsansätze, ein sog. "Kaskadieren" in Fig. 2b bzw. ein sog. "Arraying" in Fig. 2c, zur Parallelisierung am Beispiel von als integriert-optische Bauelemente ausgeführten Strahlteilern schematisch dargestellt. Eine derartige Anordnung mehrerer solcher Strahlteiler, insbesondere integriert-optischer Bauelemente, beinhaltet jedoch gravierende Nachteile.

Im Falle des "Kaskadieren" (Fig. 2b) wird eine Gesamtlänge des Sensors S merklich erhöht, wobei die Gesamtlänge mit der Anzahl der Y-Verzweigungen der Strahlteiler und damit der Anzahl an Lichtwellenleitern 100,101,102,103, 104,105,106 linear anwächst. Diese Gesamtlänge ist jedoch aufgrund einer Dämpfung des Lichtstrahles L und der Lichtbündel $L_1$ und $L_2$ in den Lichtwellenleitern von hoher Bedeutung, da zur Detektierung des Interferenzmusters eine Mindestintensität gewährleistet sein muß. Zudem führt eine solche Anordnung zu einem erhöhten Platzbedarf.

Im Falle des "Arraying" (Fig. 2c) sind die einzelnen Sensoren S1 und S2 parallel zueinander geschaltet. Somit ist es notwendig, einen Lichtstrahl L nacheinander in die einzelnen Sensoren S1 und S2 einzukoppeln oder ein Lichtstrahl L über einen optischen Strahlteiler H, vorzugsweise ein diffraktives optisches Element, in eine Vielzahl von Lichtbündeln aufzuteilen, die anschließend einzeln in die Lichtwellenleiter 110, 120 der Sensoren S1 und S2 eingekoppelt werden müssen. Beim Messen mit einer solchen Anordnung der Sensoren als sog. Array darf ein Meßsignal (Interferenzmuster) zu einem bestimmten Zeitpunkt jeweils nur von einem integriert optischen Bauelement S1 oder S2 erzeugt werden, da sonst weitere Interferenzen mit den Lichtbündeln des anderen optischen Bauelementes S2 oder S1 entstehen, und bei identischer Sensorgeometrie nicht unterschieden werden können.

Der wesentliche Nachteil, daß eine detektierte Änderung nicht eindeutig einem Sensorarm (Meßstrecke), also einem Lichtbündel zuzuordnen ist, wird somit durch solche denkbaren Lösungsansätze nicht behoben.

Es ist Aufgabe der vorliegenden Erfindung, ein optisches Analyseverfahren der eingangs genannten Art derart zu verbessern, daß eine detektierte Änderung eindeutig einem Lichtbündel bzw. einer Meßstrecke zugeordnet werden kann.

Die vorgenannte Aufgabe wird bei einem optisches Analyseverfahren der eingangs genannten Art erfindungsgemäß gelöst durch eine Ortsfrequenzanalyse einer bei der Überlagerung von zumindest drei Lichtbündeln $L_1$, $L_2$ und $L_3$ entstehenden charakteristischen, linienförmigen Intensitätsverteilung.

Nach einem bevorzugten Ausführungsbeispiel des optischen Analyseverfahrens werden charakteristische Interferenzsignale $I_{12}$, $I_{23}$, und $I_{13}$ der Intensitätsverteilung mittels Ortsfrequenzen $f_{12}$, $f_{23}$ und $f_{13}$ derselben den paarweise überlagerten Lichtbündeln $L_1$-$L_2$, $L_2$-$L_3$ und $L_1$-$L_3$ zugeordnet, wobei die Ortsfrequenzen $f_{12}$, $f_{23}$ und $f_{13}$ mittels der Ortsfrequenzanalyse bestimmt werden.

Dabei wird vorzugsweise eine Analyse einer Phasenlage zumindest eines der Interferenzsignale $I_{12}$, $I_{23}$ und $I_{13}$ auf der entsprechenden Ortsfrequenz $f_{12}$, $f_{23}$ und $f_{13}$ durchgeführt.

Bevorzugterweise wird eine Phasenverschiebung einem der Lichtbündelpaare $L_1$-$L_2$, $L_2$-$L_3$, $L_1$-$L_3$ mittels der Analyse der Phasenlage der entsprechenden Interferenzsignale $I_{12}$, $I_{23}$, $I_{13}$ auf den zugehörigen Ortsfrequenzen $f_{12}$, $f_{23}$, $f_{13}$ dem entsprechenden Lichtbündel $L_1$, $L_2$, $L_3$ zugeordnet.

Die paarweise Überlagerung von jeweils zwei der Lichtbündel $L_1$-$L_2$, $L_2$-$L_3$ und $L_1$-$L_3$ erzeugt ein Interferenzmuster mit Interferenzsignalen $I_{12}$, $I_{23}$ und $I_{13}$ mit jeweils einer charakteristischen Ortsfrequenz $f_{12}$, $f_{23}$ und $f_{13}$, die eindeutig unterscheidbar von anderen paarweisen Überlagerungen der übrigen Lichtbündel ist. Somit kann eine Beeinflussung eines oder mehrerer der Lichtbündel $L_1$, $L_2$ und $L_3$, welche eine Phasenverschiebung des bzw. der Lichtbündel $L_1$, $L_2$ und $L_3$ zur Folge hat, mittels der Auswertung der Phasenlage des zugehörigen Interferenzsignals bzw. der zugehörigen Interferenzsignale $I_{12}$, $I_{31}$ bzw. $I_{12}$, $I_{23}$ bzw. $I_{23}$, $I_{13}$ auf der entsprechenden Ortsfrequenz $f_{12}$ bzw. $f_{23}$ bzw. $f_{13}$ nachgewiesen werden.

Nach einem bevorzugten Ausführungsbeispiel werden die Lichtstrahlen L in einen primären Lichtwellenleiter 3 eingekoppelt, auf mehrere sekundäre Lichtwellenleiter 5a,5b,5c aufgeteilt und aus den sekundären Lichtwellenleitern 5a,5b,5c ausgekoppelt. Weiterhin werden die aus den sekundären Lichtwellenleitern 5a, 5b,5c ausgekoppelten Lichtbündel $L_1$,$L_2$,$L_3$ im Bereich der Erfassungseinrichtung 8, in der sich ein ortsauflösender Detektor befindet, zur Erfassung der Intensitätsverteilung mit den einzelnen charakteristischen Interferenzsignalen $I_{12}$, $I_{23}$, $I_{13}$ überlagert.

Demzufolge wird ein in den Strahlteiler eingekoppelter Lichtstrahl vorzugsweise in einem Eingangsbereich (primärer Lichtwellenleiter und mehrmodiger Abschnitt) auf die einzelnen Lichtbündel aufgeteilt, wobei sich die einzelnen Lichtbündel insbesondere entlang des planaren Lichtwellenleiters in den Sensorarmen weiter ausbreiten, und wobei die Sensorarme abschnittsweise voneinander verschiedene Abstände aufweisen. Zumindest eines der Lichtbündel steht mit einem zu detektierenden Medium zumindest in einem Abschnitt eines Sensorarms insbesondere mit den an der Oberfläche angelagerten Bestandteilen des Mediums in Kontakt, so daß die Ausbreitungsgeschwindigkeit dieses Lichtbündels und damit die Phase dieses Lichtbündels relativ zu den anderen unbeeinflußten Lichtbündel in den weiteren Sensorarmen beeinflußt wird. Die Überlagerung des beeinflußten Lichtbündels mit zumindest einem der anderen unbeeinflußten (Referenz-) Lichtbündel führt zu einem Interferenzsignal, aus dem beispielsweise ein Brechungsindex der zu messenden Substanz bestimmbar ist. Dazu werden die aus den sekundären Lichtwellenleitern ausgekoppelten Lichtbündel bevorzugt in einer Ebene senkrecht zum Lichtwellenleiter zur Erzeugung der linienförmigen Intensitätsverteilung (auch Interferenzmuster genannt) überlagert.

Mittels des erfindungsgemäßen Verfahrens können sowohl zeitlich eng begrenzte Vorgänge oder Reaktionen, insbesondere in-situ Reaktionen an einer Oberfläche des Sensors (S) oder spontane Anlagerungsvorgänge als auch zeitlich ausgedehnte Vorgänge oder Reaktionen, insbesondere langsame Anlagerungsvorgänge oder Reaktionen, beobachtet werden.

Weitere bevorzugte Ausführungsformen des optischen Analyseverfahrens sind in den weiteren Unteransprüchen dargelegt.

Der Erfindung liegt des weiteren die Aufgabe zugrunde, eine optische Detektoreinrichtung der eingangs genannten Art zu schaffen, bei der eine Auslegung als Viel-Kanal-System ermöglicht ist.

Die vorgenannte Aufgabe wird bei einer optischen Detektoreinrichtung der eingangs genannten Art erfindungsgemäß dadurch gelöst, daß die linienförmige Intensitätsverteilung charakteristische Interferenzsignale $I_{12}$, $I_{23}$, $I_{13}$ von zumindest drei überlagerten Lichtbündeln $L_1, L_2, L_3$ umfaßt, wobei die Interferenzsignale $I_{12}$, $I_{23}$, $I_{13}$ voneinander verschiedene Ortsfrequenzen $f_{12}$, $f_{23}$, $f_{13}$ aufweisen.

Mit der erfindungsgemäßen optischen Detektoreinrichtung wird es auf vorteilhafte Weise möglich, eine Phasenverschiebung eindeutig einen Sensorarm bzw. einem Meßkanal zuzuordnen.

In einem bevorzugten Ausführungsbeispiel ist zwischen dem optischen Teiler 2 und den Strahlquellen $Q_1$, $Q_2$, $Q_3$ zumindest eine Meßstrecke angeordnet, wobei ein die Meßstrecke durchlaufendes Lichtbündel $L_1$, $L_2$, $L_3$ mit einem zu detektierenden Medium zumindest abschnittsweise in Kontakt tritt.

Bevorzugterweise sind der optische Teiler 2, die Meßstrecke und die Strahlquellen $Q_1$, $Q_2$, $Q_3$ in einem planaren Lichtwellenleiter integriert.

Mit der Erfassungseinrichtung 8 sind jeweils die Ortsfrequenz $f_{12}$, $f_{23}$, $f_{13}$ und die Phasenlage auf der Ortsfrequenz $f_{12}$, $f_{23}$, $f_{13}$ der einzelnen Interferenzsignale $I_{12}$, $I_{23}$, $I_{13}$ bestimmbar, wobei die insbesondere optoelektronische Empfangseinrichtung 8 nach dem bevorzugten Ausführungsbeispiel einen Fotodetektor, vorzugsweise mit vorgeschaltetem Filter, oder eine fotoelektrische Erfassungseinrichtung, insbesondere eine CCD-Zeile, aufweist.

Bevorzugterweise sind Abstände $Q_1$-$Q_2$ bzw. $Q_2$-$Q_3$ zwischen benachbarten Strahlquellen $Q_1$, $Q_2$, $Q_3$ des optischen Teilers 2 voneinander verschieden. Strahlquellen sind dabei Stellen, an denen die Lichtbündel divergent aus dem optischen Teiler 2 ausstrahlen.

Eine nicht äquidistante Anordnung der einzelnen Meßstrecken (Sensorarme), d.h. unterschiedliche Abstände zwischen benachbarten Strahlquellen $Q_1$-$Q_2$, $Q_2$-$Q_3$, erzeugt für jedes Strahlenpaar $L_1$-$L_2$; $L_2$-$L_3$; $L_3$-$L_1$ ein charakteristisches Interferenzsignal $I_{12}$; $I_{23}$; $I_{31}$, welches durch geeignete Auswahl der Abstände der Strahlquellen von den anderen Strahlenpaaren eindeutig unterscheidbar ist. Durch diese geeignete Auswahl der Abstände weisen die paarweisen Überlagerungen der Lichtbündel $L_1, L_2, L_3$ unterschiedliche Ortsfrequenzen $f_{12}$, $f_{23}$, $f_{31}$ auf. Diese Unterscheidung kann mittels einer Ortsfrequenzanalyse (Fourieranalyse) des Interferenzmusters getroffen werden. Diese Empfangseinrichtung 8 ist dementsprechend bevorzugt dazu vorgesehen, die räumliche Intensitätsverteilung zu bestimmen, wobei durch eine Fourieranalyse der Intensitätsverteilung sowohl die Ortsfrequenz also auch die Phasenlage der Ortsfrequenz bestimmbar ist.

Die Überlagerungsebene I der Lichtbündel $L_1$, $L_2$, $L_3$ ist insbesondere senkrecht zu einer Hauptausbreitungsrichtung der aus den einzelnen Strahlquellen $Q_1$, $Q_2$, $Q_3$ des optischen Teilers 2 ausstrahlenden Lichtbündel $L_1$, $L_2$, $L_3$ angeordnet.

Gemäß einem weiteren Ausführungsbeispiel sind Abstände zwischen den einzelnen Strahlquellen $Q_1$, $Q_2$, $Q_3$ des optischen Teilers 2 und der Überlagerungsebene I zueinander verschieden.

Nach einem weiteren Ausführungsbeispiel besteht die Möglichkeit Brennpunkte der einzelnen Lichtbündel $L_1$, $L_2$, $L_3$ mittels zugehöriger Fokussiereinrichtungen vor oder in oder hinter der Überlagerungsebene I zu fokussieren.

Die Ortsfrequenzen der einzelnen Interferenzsignale sind auch in den beiden vorstehend beschriebenen weiteren Ausführungsbeispielen charakteristisch für die einzelnen überlagerten Lichtbündel, da die einzelnen Ortsfrequenzen des Interferenzsignales (wie vorstehend beschrieben) auch von einem Abstand zwischen den jeweiligen Strahlquellen $Q_1$, $Q_2$, $Q_3$ der beiden überlagerten Lichtbündel $L_1$ und $L_2$ und der Erfassungseinrichtung bzw. einer Länge des Strahlenganges der Lichtbündel $L_1$ und $L_2$ abhängt.

Gemäß einem besonders vorteilhaften Ausführungsbeispiel weist der optische Teiler 2 einen Multi-Mode-Interferenz Koppler ('MMI-Koppler') auf. Bevorzugterweise umfaßt der MMI-Koppler 2 eine Reihenanordnung aus zumindest einem primären, monomodigen Lichtwellenleiter 3, einem mehrmodigen Abschnitt 4 und einer Mehrzahl an zueinander in einer Parallelschaltung angeordneten, sekundären und monomodigen Lichtwellenleitern 5a, 5b, 5c auf, wobei die sekundären Lichtwellenleiter 5a, 5b, 5c zumindest in Teilbereichen parallel zueinander ausgerichtet sind und Abstände A,B zwischen den parallel angeordneten Bereichen benachbarter sekundären Lichtwellenleiter 5a, 5b, 5c verschieden sind. Zudem sind die einzelnen sekundären Lichtwellenleiter 5a, 5b, 5c vorteilhafterweise als unabhängige Meßstrecken der Detektoreinrichtung 1 vorgesehen.

Teilbereiche des MMI-Kopplers 2 können mit einer Deckschicht versehen sein. Dabei ist es zu bevorzugen, wenn ausschließlich ein mit der Substanz oder dem Stoffgemisch in Kontakt stehender Bereich des MMI-Kopplers 2 ohne die Deckschicht ausgeführt ist.

In einer nachstehend näher beschriebenen Ausführungsform dieses besonders bevorzugten Ausführungsbeispieles weist der als planarer Lichtwellenleiter ausgebildete MMI-Koppler 2 einen primären Lichtwellenleiter 3 zur Einkopplung des Lichtstrahles L, einen mehrmodigen Abschnitt 4 zur Aufteilung des Lichtstrahles L auf drei Lichtbündel $L_1$, $L_2$, $L_3$ und drei sekundäre Lichtwellenleiter 5a, 5b, 5c auf, wobei ein Abstand A zwischen parallelen Abschnitten des ersten und zweiten sekundären Lichtwellenleiters 5a, 5b verschieden ist zu einem weiteren Abstand B zwischen parallelen Abschnitten des zweiten und dritten sekundären Lichtwellenleiters 5b, 5c. Die aus den sekundären Lichtwellenleitern 5a, 5b, 5c ausgekoppelten Lichtbündel $L_1$, $L_2$, $L_3$ sind in der Überlagerungsebene I senkrecht zum Lichtwellenleiter des MMI-Kopplers 2 zur Erzeugung der linienförmigen Intensitätsverteilung überlagert.

Dabei repräsentieren die einzelnen sekundären Lichtwellenleiter voneinander unabhängige Meßstrecken ('Sensorarme') der optischen Detektoreinrichtung.

Somit kann eine Phasenverschiebung eines mit einem zu detektierenden Medium zumindest teilweise in Kontakt stehenden Lichtbündels eindeutig einem der sekundären Lichtwellenleiter, also einem der Sensorarme, zugeordnet werden.

Treten mehrere der Lichtbündel mit einem oder mehreren zu detektierenden Medium über die entsprechenden evaneszenten Felder dieser Lichtbündel in Kontakt, können die einzelnen Phasenverschiebungen mittels der Ortsfrequenzen den Lichtbündeln bzw. den entsprechenden Sensorarmpaare zugeordnet werden. Aus der Kombination kann auf die Beeinflussung der einzelnen Lichtbündel $L_1$, $L_2$ und $L_3$ rückgeschlossen werden.

Es besteht also keine Notwendigkeit, wie bei bekannten Meßsystemen ausschließlich ein Lichtbündel mit dem Detektionsmedium über das entsprechende evaneszente Feld in Kontakt zu bringen oder zwingend einen Vergleich mit einem Referenzsensorarm durchzuführen.

Weitere bevorzugte Ausführungsbeispiele der optischen Detektoreinrichtung sind in den zugehörigen weiteren Unteransprüchen dargelegt.

Die Erfindung wird nachstehend anhand von Ausführungsbeispielen und den zugehörigen Zeichnungen näher erläutert. In diesen zeigen:

Fig. 1a      eine schematische Darstellung des interferometrischen Meßprinzips im Falle einer geführten Lichtwelle,

Fig. 1b      eine schematische Darstellung des interferometrischen Meßprinzips im Falle einer geführten Lichtwelle bei refraktometrischer Messung,

Fig. 1c      eine schematische Darstellung des interferometrischen Meßprinzips im Falle einer geführten Lichtwelle bei biochemischer Anbindung der zu detektierenden Medien,

Fig. 2a      ein Sensorprinzip des Young-Interferometers,

Fig. 2b      eine schematische Darstellung einer möglichen "kaskadenförmigen" Parallelisierung des interferometrischen Meßprinzipes,

Fig. 2c      eine schematische Darstellung einer möglichen "array-förmigen" Parallelisierung des interferometrischen Meßprinzipes,

Fig. 3      eine schematische Darstellung einer strukturellen Auslegung der optischen Detektoreinrichtung nach einem bevorzugten Ausführungsbeispiel,

Fig. 4      Darstellung von Meßergebnissen refraktometrischer Messungen mit einem Muster eines nach Fig. 4 hergestellten Sensors.

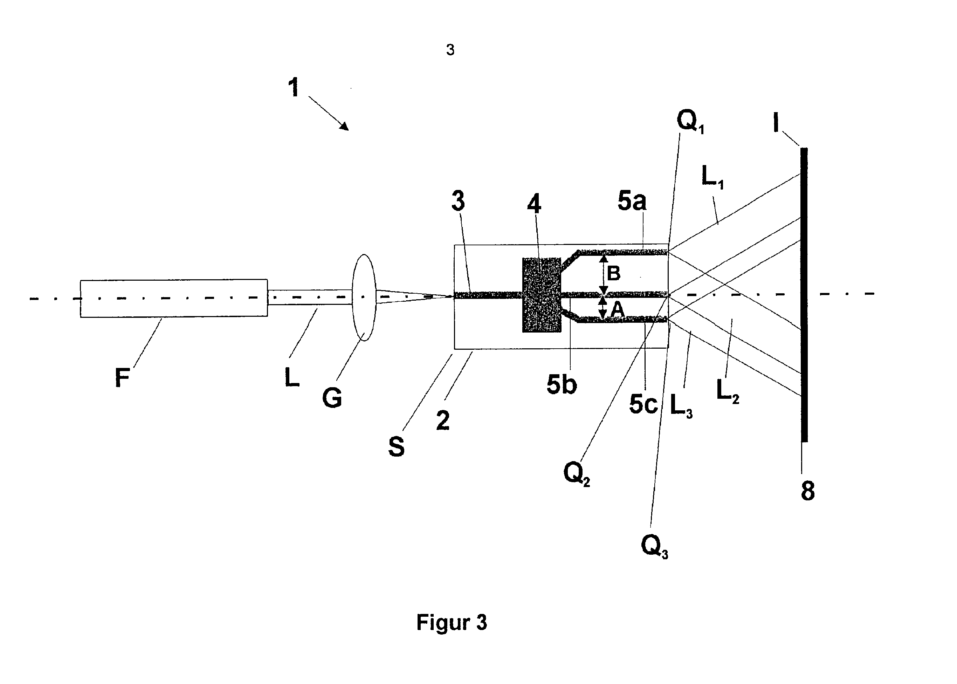

Zunächst wird auf Fig. 3 Bezug genommen, die in schematischer Darstellung ein bevorzugtes Ausführungsbeispiel der optischen Detektoreinrichtung 1 mit einem integriert optischen Bauelement 2 auf einer Oberfläche des Sensors S zeigt.

Das integriert optische Bauelement 2 weist optische Lichtwellenleiter 3, 4, 5a, 5b, 5c auf, wobei Lichtstrahlen L in den optischen Lichtwellenleitern 3, 4, 5a, 5b, 5c im sogenannten Wellenleiterkern dieser Lichtwellenleiter 3, 4, 5a, 5b, 5c geführt sind. Die Führung beruht darauf, daß der Wellenleiterkern durch eine totalreflektierende Übergangsfläche von der Umgebung abgegrenzt ist. Abhängig davon, ob die optischen Lichtwellenleiter 3, 4, 5a, 5b, 5c keinen Mode, ausschließlich einen Mode oder mehrere Moden führen können, werden die optischen Wellenleiter als Cut-Off, Mono-Mode oder Multi-Mode bezeichnet.

In den Fig. 2a, 2b, 2c sind unterschiedliche Ausführungsbeispiele von als Strahlteiler ausgeführten integriert optischen Bauelementen dargestellt. Solche Strahlteiler werden allgemein als $\bar{N} \times N$ Teiler bezeichnet, wobei $\bar{N}$ und N eine Anzahl an Eingängen bzw. Ausgängen der jeweiligen integriert optischen Bauelemente repräsentieren.

Die in Fig. 2a dargestellte symmetrische Y-Verzweigung eines primären Lichtwellenleiters 100 auf zwei sekundäre Lichtwellenleiter 101,102 stellt eine einfache Lösung eines 1x2—Teilers mit einem symmetrischen Intensitätsverhältnis (50 % - 50 %) zweier Sensorarme 101,102 dar.

Die Figuren 2b und 2c zeigen unterschiedliche Methoden, wie mittels mehrerer Y-Verzweigungen 1x4-Teiler realisierbar sind.

Bei der in Fig. 2b gezeigten mögliche serielle (kaskadenförmige) Verschaltung ist zur Erzeugung von vier Lichtbündeln zwar nur eine Lichtquelle F notwendig, jedoch ergibt diese als Kaskadieren bezeichnete Verschaltung relativ lange Sensorstrukturen. Die Dämpfung der Lichtstrahlen L in den Lichtwellenleitern 100,101,102,103,104, 105,106 führt zu Einschränkungen der Detektierbarkeit der Interferenzmuster.

Bei der in Fig. 2c gezeigten weiteren möglichen parallelen Anordnung ("Arraying") zweier getrennter Y-Verzweigungen S1,S2 ist ebenfalls eine Aufteilung eines Lichtstrahles L auf vier Lichtbündel $L_1$, $L_2$, $L_3$, $L_4$ bei relativ kurzer Länge des Sensors möglich, jedoch muß zwischen die Lichtquelle F und dem Sensor ein strahlteilendes Element H zur Aufteilung des Lichtstrahles L und Mikrooptiken G1, G2 zur Einkopplung der entstandenen Lichtbündel in die beiden Y-Verzweigungen S1, S2 notwendigerweise angeordnet werden.

In Fig. 3 ist unter anderem ein integriert optisches Bauelement 2 mit einem sogenannten MMI-Koppler (Multi-Mode-Interferenzkoppler) gezeigt, das eine Aufteilung eines Lichtstrahles L auf 1 x N Lichtbündel ermöglicht.

Die vorliegende optische Detektoreinrichtung 1 nutzt einen solchen MMI-Koppler 2 als Strahlteiler 2. Ein von einer Lichtquelle F der vorliegenden optischen Detektoreinrichtung 1 emittierter Lichtstrahl L wird dabei in einen Lichtwellenleiter 3 eines auf einen planaren Lichtwellenleiter des Sensors S ausgebildeten Strahlteilers 2 eingekoppelt. Der Strahlteiler 2 teilt den eingekoppelten Lichtstrahl L in mehrere Lichtbündel $L_1$, $L_2$, $L_3$ auf.

Der MMI-Koppler 2 weist eine Reihenanordnung aus zumindest einem primären, monomodigen Lichtwellenleiter 3, in den der Lichtstrahl L eingekoppelt wird, einen mehrmodigen Abschnitt 4, in dem der eingekoppelte Lichtstrahl L aufgeteilt wird, und eine Mehrzahl an sekundären monomodigen Lichtwellenleitern 5a, 5b, 5c (sog. Sensorarmen), in denen die gebildeten Lichtbündel $L_1$, $L_2$, $L_3$ weitergeleitet werden, auf. Die mit dem mehrmodigen Abschnitt 4 jeweils separat verbundenen Sensorarme 5a,5b,5c sind dabei zueinander in einer Parallelschaltung angeordnet.

Die in einer Parallelschaltung angeordneten Sensorarme 5a, 5b, 5c sind zumindest in Teilbereichen parallel zueinander ausgerichtet, wobei die parallel zueinander angeordneten Bereiche der sekundären Lichtwellenleiter 5a, 5b, 5c bevorzugt unterschiedliche Abstände A,B relativ zueinander aufweisen.

In dem in Fig. 3 dargestellten Ausführungsbeispiel der optischen Detektoreinrichtung 1 weist der MMI-Koppler 2 genau einen Lichtwellenleiter 3 zur Einkopplung des Lichtstrahles 6, einen mehrmodigen Abschnitt 4 zur Aufteilung des Lichtstrahles auf drei Lichtbündel $L_1$, $L_2$, $L_3$ und drei sekundäre Lichtwellenleiter 5a, 5b, 5c auf.

Diese Anzahl an primären und sekundären Lichtwellenleitern und mehrmodigen Abschnitten stellt jedoch ausschließlich ein bevorzugtes Ausführungsbeispiel der vorliegenden optischen Detektoreinrichtung 1 als sog. "Drei-Kanal-Meßsystem" dar, ohne darauf beschränkt zu sein. Durch eine frei wählbare Anzahl an Lichtwellenleitern kann ein frei definierbares "Viel-Kanal-System" mit N Sensorarmen geschaffen werden.

Die einzelnen sekundären Lichtwellenleiter 5a, 5b, 5c der optischen Detektoreinrichtung 1 sind in dem in Fig. 3 dargestellten bevorzugten Ausführungsbeispiel als unabhängige Meßstrecken vorgesehen.

Diese Meßstrecken sind zumindest in Teilbereichen mit einer Deckschicht versehen, wobei ausschließlich die mit einer zu messenden Substanz oder einem zu messenden Stoffgemisch in Kontakt stehenden Bereiche der Meßstrecken ohne eine Deckschicht ausgeführt sind.

Die aus den sekundären Lichtwellenleitern 5a, 5b, 5c ausgekoppelten Lichtbündel $L_1$, $L_2$, $L_3$ sind in einer Ebene I senkrecht zum Sensor 2 zur Erzeugung einer charakteristischen, linienförmigen Intensitätsverteilung (Interferenzmuster) überlagert. In dieser Ebene I ist eine Empfangseinrichtung 8 zur Bestimmung der Intensitätsverteilung angeordnet, wobei die Empfangsvorrichtung 8 bevorzugt zur Erfassung von Interferenzsignalen $I_{12}$, $I_{23}$, $I_{31}$ vorgesehen ist. Durch eine Analyse der Ortsfrequenzen der Intensitätssignale $I_{12}$, $I_{23}$, $I_{31}$ und deren jeweiliger Phasenlage lassen sich die Phasenverschiebungen der Lichtbündel $L_1$, $L_2$, $L_3$ ermitteln.

Die Empfangsvorrichtung 8 weist in dem bevorzugten Ausführungsbeispiel einen Fotodetektorzeile, vorzugsweise mit vorgeschaltetem Filter, auf. In einem weiteren Ausführungsbeispiel wird eine fotoelektrische Erfassungseinrichtung, insbesondere eine CCD-Zeile oder CCD-Kamera, als Empfangseinrichtung verwendet.

Tritt ein sich in einem der Sensorarme 5a, 5b, 5c ausbreitendes Lichtbündel $L_1$, $L_2$, $L_3$ mit einem zu messenden Medium über sein evaneszentes Feld in Kontakt, wird eine Ausbreitungsgeschwindigkeit dieses Lichtbündels $L_1$, $L_2$, $L_3$ beeinflußt. Es tritt eine Phasenverschiebung dieses Lichtbündels $L_1$, $L_2$, $L_3$ relativ zu den sich in den weiteren Sensorarmen 5a, 5b, 5c des Sensors 2 ausbreitenden Lichtbündel auf. Diese Phasenverschiebung wird mittels einer Auswertung von Interferenzmustern der aus dem MMI-Koppler 2 ausgekoppelten divergent ausstrahlenden Lichtbündel $L_1$, $L_2$, $L_3$ bestimmt.

Beim vorliegenden optischen Analyseverfahren erfolgt eine Aufteilung des in den primären Lichtwellenleiter 3 eingekoppelten Lichtstrahles L auf mehrere Lichtbündel $L_1$, $L_2$, $L_3$ derart, daß der eingekoppelte Lichtstrahl L in mehrere Lichtbündel $L_1$, $L_2$, $L_3$ aufgeteilt wird, die jeweils paarweise unterscheidbare Interferenzsignale $I_{12}$, $I_{23}$, $I_{31}$ bilden.

Mittels einer Bestimmung der Ortsfrequenzen $f_{12}$, $f_{23}$, $f_{31}$ der Interferenzsignale $I_{12}$, $I_{23}$, $I_{31}$ werden Phasenverschiebungen, welche mittels eines ortsauflösenden Detektors 8 in einer Detektionsebene I durch Überlagerung der aus den sekundären Lichtwellenleitern 5a, 5b, 5c ausgekoppelten Lichtbündeln $L_1$, $L_2$, $L_3$ ermittelt werden, den einzelnen Lichtbündelpaaren $L_1$-$L_2$, $L_2$-$L_3$, $L_3$-$L_1$ direkt zugeordnet.

Dabei können sowohl zeitlich eng begrenzte Vorgänge oder Reaktionen, insbesondere in situ Reaktionen an der Oberfläche des Sensors S und spontane Anlagerungsvorgänge oder zeitlich ausgedehnte Vorgänge oder Reaktionen, insbesondere langsame Anlagerungsvorgänge oder Reaktionen, beobachtet werden.

Auf Basis des in Fig. 3 schematisch dargestellten Sensors wurde zu Testzwecken ein Muster des Sensors S der optischen Detektoreinrichtung 1 mit einem 1 x 3 MMI-Koppler 2 hergestellt.

Der Sensor S besteht aus einer monomodigen Lichtwellenleiterplatte ($Sl_xO_yN_z$ Lichtwellenleiterschicht auf $SIO_2$-Substrat) mit einem 1 x 3 MMI-Koppler 2, wobei der MMI-Koppler 2 unterschiedliche Sensorarmabstände A=650µm und B=850µm der parallelen Bereiche der Sensorarme 5a,5b,5c aufweist. Mittels des verschiedenen Sensorarmabstände A,B werden verschiedene Ortsfrequenzen der Interferenzsignale $I_{12}$, $I_{23}$, $I_{31}$ erzeugt, bei diesem Musterexemplar: $f_{12}$=102,8µm ($I_{12}$), $f_{23}$=78,7µm ($I_{23}$), $f_{31}$=44,6µm ($I_{31}$).

Durch Auswertung der Phasenlage auf der zugehörigen Ortsfrequenz können die Änderungen der Phasenrelation der Lichtbündel $L_1$, $L_2$, $L_3$ gezielt hergeleitet werden.

Somit kann eine Änderung der Phasenrelation einer Meßstrecke, also einem der Sensorarme, gezielt zugeordnet werden.

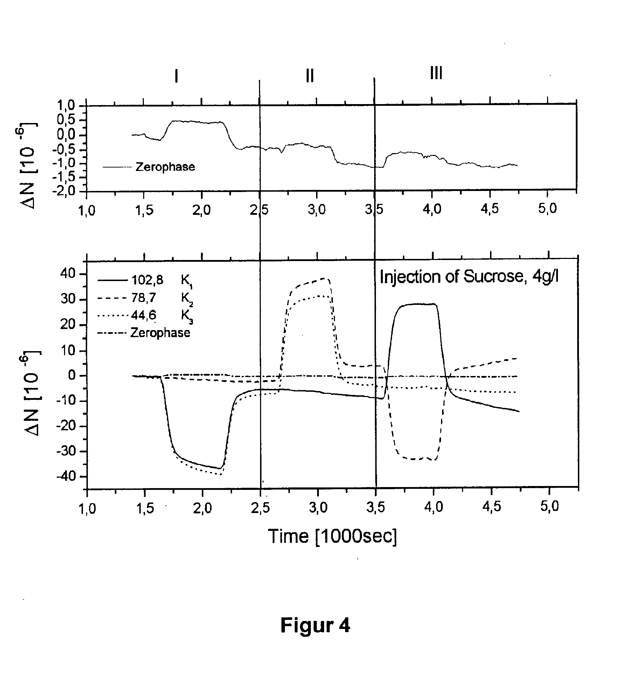

Die Eigenschaften des beschriebenen Sensors 2 wurden mit einer refraktometrischen Messung charakterisiert. In dem in Fig. 4 abgebildeten Diagramm sind die Ergebnisse dieser Messung abgebildet. Dabei wurde eine Saccharoselösung (4g/l) seriell auf die drei Meßstrecken (Sensorarme) 5a,5b,5c injiziert und die Phasenverhältnisse der Lichtbündel $L_1$, $L_2$, $L_3$ beobachtet, d.h. eine Phasenverschiebung der Interferenzmuster $I_{12}$, $I_{23}$, $I_{31}$ auf den zugehörigen Ortsfrequenzen $f_{12}$, $f_{23}$, $f_{31}$ wird ermittelt und den Teilstrahlen $L_1$, $L_2$, $L_3$ zugeordnet.

Die drei ersten Kurven K1, K2, K3 (K1=102,8 µm, K2=78,7 µm, K3=44,6 µm) repräsentieren die drei Phasenrelationen, die durch die unterschiedlichen Sensorabstände A, B (650 µm, 850 µm) entstehen. Der gesamte Phasenunterschied (Zerophase), welcher sich aus K1+K2-K3 ergibt und welcher sich im Ergebnis zu Null summieren muß, wurde berechnet und ist in einer weiteren Kurve K4 dargestellt.

Bei der Versuchsdurchführung wurde die Saccharoselösung seriell auf die Sensorarme 5a, 5b, 5c injiziert, wobei eine Injektion zwei Phasenrelationen beeinflußt, d.h. eine Injektion auf dem Sensorarm, in dem das Lichtbündel $L_1$ geführt ist, beeinflußt die Überlagerung von $L_1$ und $L_2$, also $I_{12}$ und die Überlagerung von $L_1$ und $L_3$, also $I_{31}$. Entsprechendes gilt für die Lichtbündel $L_2$ und $L_3$.

Die gemessenen Veränderungen der Phasenverschiebungen, welche in dem in Fig. 4 abgebildeten Diagramm als effektiver Brechungsindex ΔN dargestellt sind, sind deutlich erkennbar.

Ebenso wird deutlich, daß bei diesem Drei-Kanal-System eine Beaufschlagung eines Sensorarmes eindeutig (mittels der Ortsfrequenzen der Interferenzsignale) den einzelnen Lichtbündeln zugeordnet werden kann.

Aus dem in Fig. 4 gezeigten Diagramm ist zudem ersichtlich, daß nicht nur die Beaufschlagung selbst zu beobachten ist, sondern auch zeitlich andauernde Anlagerungs-Vorgänge wie beispielsweise Drift einem der Meßstrecken (Sensorarme) zugeordnet werden kann. Dies zeigt sich besonders in Sektion III, bei der theoretisch nach der letzten Beaufschlagung der entsprechenden Sensorarme die Phasenrelationen auf einen stabilen Wert zurückkehren sollten, Jedoch ist eine Drift bei den Ortsfrequenzen 102,8 µm und 78,7 µm erkennbar. Da die Ortsfrequenz 44,6 µm stabil ist, bedeutet dies, daß ein Effekt auf dem Sensorarm, der nicht diese Ortsfrequenz beeinflussen kann, also der in diesem Stadium der Versuchsdurchführung nicht mit der Saccharoselösung beaufschlagt wurde, stattfindet.

## Patentansprüche

1. Optisches Analyseverfahren mit einer Aufteilung von Lichtstrahlen (L) mittels eines optischen Teilers (2) in mehrere Lichtbündel ($L_1$,$L_2$,$L_3$), wobei eine Phasengeschwindigkeit zumindest eines der Lichtbündel ($L_1$,$L_2$,$L_3$) bei Analyse eines Mediums von dem Medium beeinflußt wird, und wobei die Lichtbündel ($L_1$,$L_2$,$L_3$) im Bereich einer Erfassungseinrichtung (8) überlagert werden, **gekennzeichnet durch** eine Ortsfrequenzanalyse einer bei der Überlagerung von zumindest drei Lichtbündeln ($L_1$, $L_2$,$L_3$) entstehenden charakteristischen, linienförmigen Intensitätsverteilung.

2. Optisches Analyseverfahren nach Anspruch 1, **dadurch gekennzeichnet, daß** charakteristische Interferenzsignale ($I_{12}$,$I_{23}$,$I_{13}$) der Intensitätsverteilung mittels Ortsfrequenzen ($f_{12}$,$f_{23}$,$f_{13}$) derselben den paarweise überlagerten Lichtbündeln ($L_1$-$L_2$, $L_2$-$L_3$, $L_1$-$L_3$) zugeordnet werden, wobei die Ortsfrequenzen ($f_{12}$,$f_{23}$,$f_{13}$) mittels der Ortsfrequenzanalyse bestimmt werden.

3. Optisches Analyseverfahren nach einem der Ansprüche 1 oder 2, **gekennzeichnet durch** eine Analyse einer Phasenlage zumindest eines der Interferenzsignale ($I_{12}$,$I_{23}$,$I_{13}$) auf der entsprechenden Ortsfrequenz ($f_{12}$,$f_{23}$,$f_{13}$).

4. Optisches Analyseverfahren nach zumindest einem der vorhergehenden Ansprüche 1 bis 3, **dadurch gekennzeichnet, daß** eine Phasenverschiebung einem der Lichtbündelpaare ($L_1$-$L_2$,$L_2$-$L_3$,$L_1$-$L_3$) mittels der Analyse der Phasenlage der entsprechenden Interferenzsignale ($I_{12}$,$I_{23}$,$I_{13}$) auf den zugehörigen Ortsfrequenzen ($f_{12}$,$f_{23}$,$f_{13}$) dem entsprechenden Lichtbündel ($L_1$,$L_2$,$L_3$) zugeordnet wird.

5. Optisches Analyseverfahren nach zumindest einem der vorhergehenden Ansprüche 1 bis 4, **dadurch gekennzeichnet, daß** die Lichtstrahlen (L) in einen primären Lichtwellenleiter (3) eingekoppelt, auf mehrere sekundäre Lichtwellenleiter (5a, 5b,5c) aufgeteilt und aus den sekundären Lichtwellenleitern (5a,5b,5c) ausgekoppelt werden.

6. Optisches Analyseverfahren nach Anspruch 4, **dadurch gekennzeichnet, daß** die aus den sekundären Lichtwellenleitern (5a,5b,5c) ausgekoppelten Lichtbündel ($L_1$,$L_2$,$L_3$) im Bereich der Erfassungs-

einrichtung (8), in der sich ein ortsauflösender Detektor befindet, zur Erfassung der Intensitätsverteilung mit den einzelnen charakteristischen Interferenzsignalen ($I_{12}$,$I_{23}$,$I_{13}$) überlagert werden.

7. Optisches Analyseverfahren nach zumindest einem der vorhergehenden Ansprüche 1 bis 5, **dadurch gekennzeichnet, daß** zeitlich eng begrenzte Vorgänge oder Reaktionen, insbesondere in-situ Reaktionen an einer Oberfläche des Sensors (S) oder spontane Anlagerungsvorgänge und/oder zeitlich ausgedehnte Vorgänge oder Reaktionen, insbesondere langsame Anlagerungsvorgänge oder Reaktionen, beobachtet werden.

8. Optische Detektoreinrichtung mit einem einer Lichtquelle (F) nachgeordneten optischen Teiler (2) zur Bildung mehrerer Strahlquellen ($Q_1$,$Q_2$,$Q_3$), wobei divergent aus den Strahlquellen ($Q_1$,$Q_2$,$Q_3$) austretende Lichtbündel ($L_1$,$L_2$,$L_3$) unter Bildung einer Intensitätsverteilung im Bereich einer Erfassungseinrichtung (8) überlagert sind, **dadurch gekennzeichnet, daß** die linienförmige Intensitätsverteilung charakteristische Interferenzsignale ($I_{12}$,$I_{23}$, $I_{13}$) von zumindest drei überlagerten Lichtbündeln ($L_1$,$L_2$,$L_3$) umfaßt, wobei die Interferenzsignale ($I_{12}$, $I_{23}$,$I_{13}$) voneinander verschiedene Ortsfrequenzen ($f_{12}$,$f_{23}$,$f_{13}$) aufweisen.

9. Optische Detektoreinrichtung nach Anspruch 8, **dadurch gekennzeichnet, daß** zwischen dem optischen Teiler (2) und den Strahlquellen ($Q_1$,$Q_2$,$Q_3$) zumindest eine Meßstrecke angeordnet ist, wobei ein die Meßstrecke durchlaufendes Lichtbündel ($L_1$, $L_2$,$L_3$) mit einem zu detektierenden Medium zumindest abschnittsweise in Kontakt tritt.

10. Optische Detektoreinrichtung nach Anspruch 8 oder 9, **dadurch gekennzeichnet, daß** der optische Teiler (2), die Meßstrecke und die Strahlquellen ($Q_1$,$Q_2$,$Q_3$) in einem planaren Lichtwellenleiter integriert sind.

11. Optische Detektoreinrichtung nach zumindest einem der vorhergehenden Ansprüche 8 bis 10, **dadurch gekennzeichnet, daß** mit der Erfassungseinrichtung (8) jeweils die Ortsfrequenz ($f_{12}$,$f_{23}$,$f_{13}$) und die Phasenlage auf der Ortsfrequenz ($f_{12}$,$f_{23}$, $f_{13}$) der einzelnen Interferenzsignale ($I_{12}$,$I_{23}$,$I_{13}$) bestimmbar sind.

12. Optische Detektoreinrichtung nach zumindest einem der vorhergehenden Ansprüche 8 bis 11, **dadurch gekennzeichnet, daß** die insbesondere optoelektronische Empfangseinrichtung (8) eine Fotodetektorzeile, vorzugsweise mit vorgeschaltetem Filter, oder eine fotoelektrische Erfassungseinrichtung, insbesondere eine CCD-Zeile, aufweist.

13. Optische Detektoreinrichtung nach zumindest einem der vorhergehenden Ansprüche 8 bis 12, **dadurch gekennzeichnet, daß** Abstände ($Q_1$-$Q_2$, $Q_2$-$Q_3$) zwischen benachbarten Strahlquellen ($Q_1$,$Q_2$, $Q_3$) des optischen Teilers (2) voneinander verschieden sind.

14. Optische Detektoreinrichtung nach zumindest einem der vorhergehenden Ansprüche 8 bis 13, **dadurch gekennzeichnet, daß** Abstände zwischen den einzelnen Strahlquellen ($Q_1$,$Q_2$,$Q_3$) des optischen Teilers (2) und der Überlagerungsebene (I) zueinander verschieden sind.

15. Optische Detektoreinrichtung nach zumindest einem der vorhergehenden Ansprüche 8 bis 15, **dadurch gekennzeichnet, daß** die Überlagerungsebene (I) der Lichtbündel ($L_1$,$L_2$,$L_3$) senkrecht zu einer Hauptausbreitungsrichtung der aus den einzelnen Strahlquellen ($Q_1$,$Q_2$,$Q_3$) des optischen Teilers (2) ausstrahlenden Lichtbündel ($L_1$,$L_2$,$L_3$) angeordnet ist.

16. Optische Detektoreinrichtung nach zumindest einem der vorhergehenden Ansprüche 8 bis 15, **dadurch gekennzeichnet, daß** Brennpunkte der einzelnen Lichtbündel ($L_1$,$L_2$,$L_3$) mittels zugehöriger Fokussiereinrichtungen vor oder in oder hinter der Überlagerungsebene (I) fokussiert sind.

17. Optische Detektoreinrichtung nach zumindest einem der vorhergehenden Ansprüche 8 bis 16, **dadurch gekennzeichnet, daß** der optische Teiler (2) einen Multi-Mode-Interferenz (MMI) - Koppler aufweist.

18. Optische Detektoreinrichtung nach Anspruch 17, **dadurch gekennzeichnet, daß** der MMI-Koppler (2) eine Reihenanordnung aus zumindest einem primären, monomodigen Lichtwellenleiter (3), einem mehrmodigen Abschnitt (4) und einer Mehrzahl an zueinander in einer Parallelschaltung angeordneten, sekundären und monomodigen Lichtwellenleitern (5a,5b,5c) aufweist, wobei die sekundären Lichtwellenleiter (5a,5b,5c) zumindest in Teilbereichen parallel zueinander ausgerichtet sind und Abstände (A,B) zwischen den parallel angeordneten Bereichen benachbarter sekundären Lichtwellenleiter (5a,5b,5c) verschieden sind.

19. Optische Detektoreinrichtung nach einem der Ansprüche 17 oder 18, **dadurch gekennzeichnet, daß** die einzelnen sekundären Lichtwellenleiter (5a,5b,5c) als unabhängige Meßstrecken der Detektoreinrichtung (1) vorgesehen sind.

20. Optische Detektoreinrichtung nach zumindest einem der vorhergehenden Ansprüche 17 bis 19, **da-**

**durch gekennzeichnet, daß** zumindest Teilbereiche des MMI-Kopplers (2) mit einer Deckschicht versehen sind.

21. Optische Detektoreinrichtung nach zumindest einem der vorhergehenden Ansprüche 17 bis 20, **dadurch gekennzeichnet, daß** ausschließlich ein mit der Substanz oder dem Stoffgemisch in Kontakt stehender Bereich des MMI-Kopplers (2) ohne die Deckschicht ausgeführt ist.

22. Optische Detektoreinrichtung nach zumindest einem der vorhergehenden Ansprüche 17 bis 21, **dadurch gekennzeichnet, daß** der als planarer Lichtwellenleiter ausgebildete MMI-Koppler (2) einen primären Lichtwellenleiter (3) zur Einkopplung des Lichtstrahles (L), einen mehrmodigen Abschnitt (4) zur Aufteilung des Lichtstrahles (L) auf Teillichtstrahlen ($L_1,L_2,L_3$) und drei sekundäre Lichtwellenleiter (5a,5b,5c) aufweist, wobei ein Abstand (A) zwischen parallelen Abschnitten des ersten und zweiten sekundären Lichtwellenleiters (5a,5b) verschieden ist zu einem Abstand (B) zwischen parallelen Abschnitten des zweiten und dritten sekundären Lichtwellenleiters (5b,5c).

23. Optische Detektoreinrichtung nach zumindest einem der Ansprüche 17 bis 22, **dadurch gekennzeichnet, daß** die aus den sekundären Lichtwellenleitern (5a,5b,5c) ausgekoppelten Lichtbündel ($L_1$, $L_2,L_3$) in der Überlagerungsebene (I) senkrecht zum Lichtwellenleiter des MMI-Kopplers (2) zur Erzeugung der linienförmigen Intensitätsverteilung überlagert sind.

**Figur 1a**

**Figur 1b**

EP 1 284 418 A2

Figur 1c

EP 1 284 418 A2

**Figur 2a**

EP 1 284 418 A2

Figur 2b

Figur 2c

Figur 3

EP 1 284 418 A2

**Figur 4**